# EUROPEAN PATENT APPLICATION

(11) **EP 3 418 667 A1**
(43) Date of publication of application: **26.12.2018**
(21) Application number: 18000540.7
(22) Date of filing: 20.06.2018
(51) Int. Cl.: F28F 9/02

(54) **HEAT EXCHANGER AND HEADER FOR THE SAME**

(30) Priority: 21.06.2017 US 201715628953
(71) Applicant: Modine Manufacturing Company, Racine, Wisconsin 53403-2552 (US)
(72) Inventor: Kirklin, Allison, Racine, WI 53406 (US); Zielinski, Simon, Wheeling, IL 60090 (US); Kis, John, Kansasville, WI 53139 (US); Hernigle, Matthew, Greenfield, WI 53221 (US); Prochniak, James R., Racine, WI 53406 (US); Kottal, Peter C., Mt. Pleasant, WI 53405 (US); Shields, Thomas, Racine, WI 53404 (US); Ouradnik, Zachary, Oak Creek, WI 53154 (US)
(74) Representative: Winter, Josef

(57) **Abstract**

A header for a heat exchanger includes a first and a second cylindrical fluid manifold extending in parallel. Each of the first and second manifolds have tube slots that extend through an arcuate wall section of the manifold. A thickened wall section of the header having a generally triangular wall section is bounded by the first and second fluid manifolds and by a planar outer surface of the header. An aperture extends through the thickened wall section to provide a fluid communication pathway between the first and second cylindrical fluid manifolds.

## Description

### CROSS-REFERENCE TO RELATED APPLICATIONS

This application claims priority to U.S. Provisional Patent Application No. 62/353,618, filed June 23, 2016, the entire contents of which are hereby incorporated by reference.

### BACKGROUND

Heat exchangers are used to transfer thermal energy from one stream of fluid at a first, higher temperature to another stream of fluid at a second, lower temperature. Oftentimes such heat exchangers are used to remove waste heat from a process fluid such as oil, coolant, or the like by transferring that heat to a flow of cooler air directed to pass through the heat exchanger.

In certain applications, the process fluid to be cooled is also at an operating pressure that is substantially greater than the ambient atmospheric pressure of the heat exchanger's surroundings. As a result, it becomes necessary for the heat exchanger to be designed to withstand the pressure forces that result from the process fluid passing through the heat exchanger. This can become challenging, especially in cases where the heat exchanger is to be used in large systems and machinery such as, for example, construction equipment, agricultural machines, and the like. As the size of the machine or system increases, the flow rate of the process fluid also increases, necessitating larger heat exchangers to accommodate both the heat transfer requirements and the fluid flow rates.

In some particular styles of heat exchangers, the fluid to be cooled is directed through an array of flat tubes extending between two tanks or headers. As such heat exchangers become larger, they can have substantially large surface areas exposed to the pressure of the process fluid, especially in the tank or header areas, and the force of the fluid pressure acting on these large surfaces can lead to destructive mechanical stresses in the heat exchanger structure. The ability to withstand such pressures can be improved through the use of circular header profiles, but circular headers can be difficult to package within a compact space as the required size of the heat exchanger increases.

### SUMMARY

According to an embodiment of the invention, a header for a heat exchanger includes a first and a second cylindrical fluid manifold extending in parallel. Each of the first and second manifolds have tube slots that extend through an arcuate wall section of the manifold. A thickened wall section of the header having a generally triangular wall section is bounded by the first and second fluid manifolds and by a planar outer surface of the header. An aperture extends through the thickened wall section to provide a fluid communication pathway between the first and second cylindrical fluid manifolds.

In some embodiments, the header includes a plug that is inserted into an opening that extends through the planar outer surface to the aperture. In some such embodiments the plug is brazed to the planar outer surface. In some embodiments the plug includes an integral mounting pin that extends outwardly from the header in a direction perpendicular to the planar outer surface. In some embodiments the arcuate wall section of one of the manifolds defines a minimum wall thickness of the header, and the insertion depth of the plug through the opening is approximately equal to that minimum wall thickness.

In some embodiments the header includes a third cylindrical fluid manifold adjacent to and parallel to the second fluid manifold. A second thickened wall section of the header having a generally triangular wall section is bounded by the third and second fluid manifolds and by the planar outer surface of the header. In some such embodiments an aperture extends through the second thickened wall section to provide a fluid communication pathway between the second and third fluid manifolds.

In some embodiments the header includes a first and a second mounting flange extending from the header. The first mounting flange defines a first mounting plane and the second mounting flange defines a second mounting plane, with both the first and second mounting planes being oriented parallel to one another and perpendicular to the planar outer surface of the header. A first mounting hole extends through the first mounting flange and is aligned with a second mounting hole that extends through the second mounting flange. In some such embodiments all of the fluid manifolds are entirely located between the first and second mounting planes.

According to another embodiment, a method of making a header for a heat exchanger includes providing an extruded section with two unconnected cylindrical volumes arranged therein and with a planar outer surface, and machining through the planar outer surface to define an aperture between the two cylindrical volumes. The act of machining through the planar outer surface creates an opening in that surface, and a plug is inserted into the opening. In some embodiments the plug is brazed to the extruded section in order to secure it within the opening. In some embodiments a series of tube slots are formed into arcuate wall sections of the two cylindrical volumes opposite the planar outer surface.

In some embodiments of the invention, a heat exchanger includes a first series of parallel-arranged flat tubes to convey a first fluid through the heat exchanger, and a second series of parallel-arranged flat tubes to convey a second fluid through the heat exchanger. The first and second fluids are, for example, two fluids used within a power generating system (such as an internal combustion engine system, for example) that are cooled within the heat exchanger by a flow of air passing through the heat exchanger over the outer surfaces of the flat tubes. Such fluids can include, but are not limited to, liquid coolants, water, refrigerant, oil, and others.

The first and second series of flat tubes extend between a first and a second header arranged at opposing ends of the heat exchanger. Each of the headers has at least two cylindrical fluid manifolds, each of which is provided with tube slots that extend through an arcuate wall section of the header. Ends of the tubes are received within the tube slots.

In some embodiments, the headers are provided with more than two cylindrical fluid manifolds and the heat exchanger includes a corresponding additional series of parallel-arranged flat tubes. In some such embodiments, the additional series of tubes carries a third fluid that is distinct from the first and the second fluids. By distinct is meant that there is no hydraulic connection within the heat exchanger between the fluids. The fluids could, however, be hydraulically connected elsewhere within the system. In other embodiments, however, a third series of flat tubes is hydraulically connected within the heat exchanger to one of the first and second series of flat tubes, so that the corresponding one of the first and second fluids also flows through that third series of flat tubes.

### BRIEF DESCRIPTION OF THE DRAWINGS

FIG. 1 is a perspective view of a heat exchanger including headers according to an embodiment of the invention.
FIG. 2 is a partial perspective view of a section of a heat exchanger core used in the heat exchanger of FIG. 1.
FIG. 3 is an exploded perspective view of one of the headers of FIG. 1.
FIG. 4 is a plan cross-sectional view of the header of FIG. 3.
FIG. 5 is a plan cross-sectional view of a component of the header of FIG. 3.
FIG. 6 is a partial perspective view of a heat exchanger including headers according to another embodiment of the invention.
FIG. 7 is a partial plan view of the heat exchanger of FIG. 6.
FIG. 8 is a partial plan view of a component of one of the headers of FIG. 6.
FIG. 9 is a plan view showing two separate fluid circuits within a heat exchanger according to some embodiments of the invention.
FIG. 10 is a plan view showing three separate fluid circuits within a heat exchanger according to some embodiments of the invention.
FIG. 11 is another plan view showing two separate fluid circuits within a heat exchanger according to some embodiments of the invention.
FIG. 12 is another plan view showing two separate fluid circuits within a heat exchanger according to some embodiments of the invention.
FIG. 13 is a front view showing two separate fluid circuits within a heat exchanger according to some embodiments of the invention.
FIG. 14 is a front view showing a single fluid circuit within a heat exchanger according to some embodiments of the invention.

### DETAILED DESCRIPTION

Before any embodiments of the invention are explained in detail, it is to be understood that the invention is not limited in its application to the details of construction and the arrangement of components set forth in the following description or illustrated in the accompanying drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

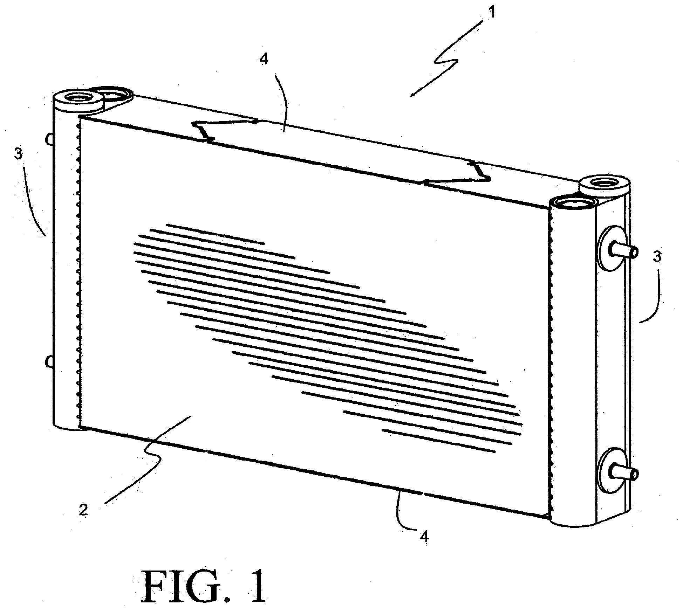

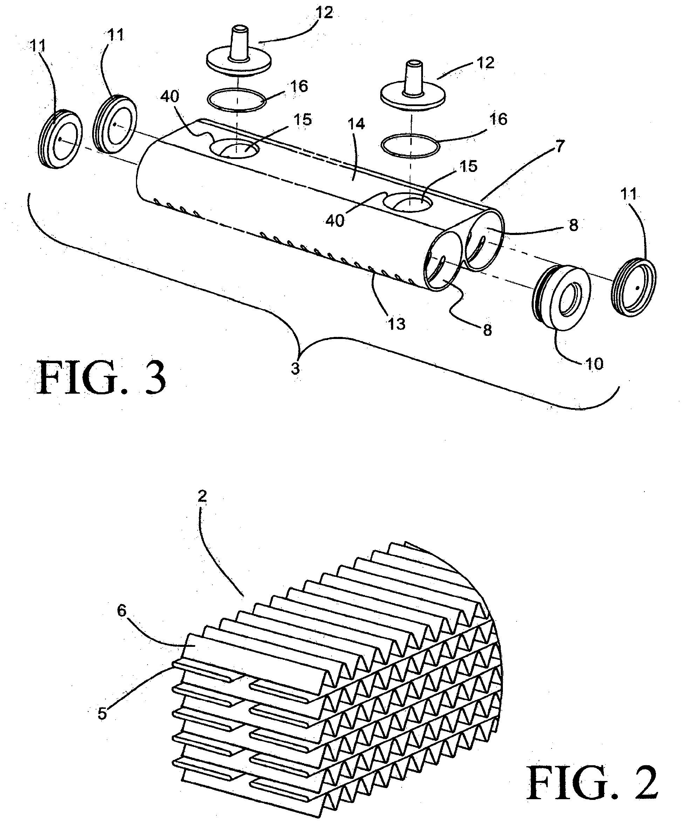

A heat exchanger 1 according to an embodiment of the invention is depicted in FIG. 1, and includes a heat exchange core 2 bounded between two side plates 4. The heat exchange core 2 is constructed as a stacked and brazed assembly of alternating layers of flat tubes 5 and corrugated fins 6, as shown in the core detail of FIG. 2. The tubes 5 and fins 6 are preferably formed of an aluminum alloy so that the heat exchanger 1 can be built to be lightweight and highly efficient in the transfer of heat between a first fluid flowing through the interiors of the tubes 5 and a second fluid (air, for example) passing through the corrugations of the fins 6. Such a heat exchanger 1 can be used as, for example, a vehicular powertrain cooling heat exchanger to cool engine oil, transmission oil, engine coolant, or some other fluid from which dissipation of heat is desired.

Open ends of the tubes 5 are received into headers 3 arranged at opposing ends of the heat exchanger 1. Each header 3 is an assembly of parts, shown in exploded view in FIG. 3. The header 3 includes an extruded section 7 that extends over generally the full stacked height of the heat exchange core 2, and provides a number of cylindrical fluid manifolds 8 that distribute the first fluid to, or receive the first fluid from, the array of tubes 5. The number of cylindrical fluid manifolds 8 that is provided by each extruded section 7 corresponds to the number of tubes 5 provided in each row of tubes of the core 2 (e.g. two, in the exemplary embodiment of FIGs. 1-5).

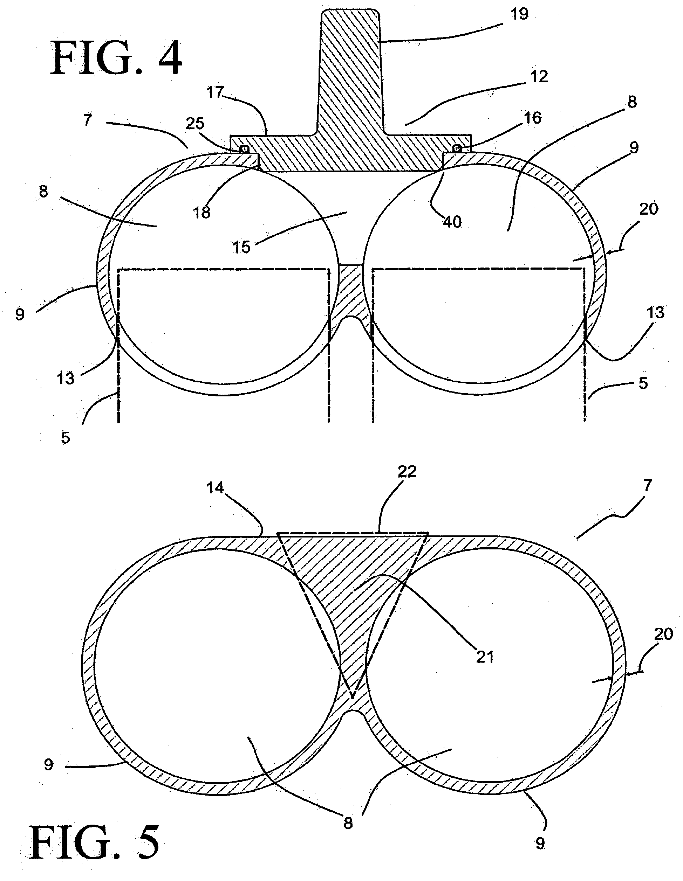

As best seen in the cross-sectional view of FIG. 5, each of the cylindrical fluid manifolds 8 is bounded by an arcuate wall section 9 over a majority of the circular periphery of the manifold, with that arcuate wall section 9 having a generally constant wall thickness (indicated by the reference number 20). On the core-facing side of header 3, the arcuate wall sections 9 of the two adjacent manifolds 8 merge together. On the opposing (i.e. the non-core-facing) side of the header 3a planar outer surface 14 of the header is provided. The planar outer surface 14, together with the cylindrical manifolds 8, bounds a thickened wall section 21 of the extruded section 7. The thickened wall section 21 has a generally triangular cross-section, as indicated in FIG. 5 by the dashed triangle 22), with a wall thickness that is substantially greater than the wall thickness 20 of the arcuate wall sections 9. As indicated by FIG. 5, the cross-section of the thickened wall section 21 can deviate somewhat from a truly triangular shape while still exhibiting a generally triangular cross-section.

Tube slots 13 are provided along the lengths of the headers 3 to receive the ends of the tubes 5 into the corresponding cylindrical fluid manifolds 8. The tube slots 13 can be formed into the extruded section 7 by, for example, saw-cutting or piercing. Each of the tube slots 13 extends through one of the arcuate wall sections 9, and has a width and height that generally corresponds to the major and minor dimensions of the flat tubes 5. The ends of the flat tubes 5 are preferably inserted into the tube slots 13 after the flat tubes 5 and the fins 6 have been stacked to form the core 2, so that the tubes 5 can be brazed to the headers 3 in the same brazing operation as is used to join the flat tubes 5 to the fins 6, thereby creating leak-free joints at the tube-to-header interfaces.

The cylindrical fluid manifolds 8 are hydraulically connected by way of one or more apertures 15 that extend through the thickened wall section 21 at one or more locations along the length of the header 3. Such an aperture 15 can be formed by a machining operation such as drilling or milling through the planar surface 14 to a predetermined depth, in which case the forming of the aperture 15 can define a circular opening 40 in the planar surface 14, as shown in FIG. 3. The predetermined depth is selected to be less than the depth that would be required in order to remove all of the material separating the cylindrical fluid manifolds 8 at that location. As best seen in the cross-sectional view of FIG. 4, the aperture 15 of the exemplary embodiment has the material in the thickened wall section 21 removed to a depth, as measured from the planar surface 14, that is approximately equal to the radius of the arcuate wall sections 9. While the exemplary embodiment depicts a circular opening 40 formed in the planar outer surface 14, it should be understood that other machining methods might result in non-circular openings.

A plug 12 can be inserted into the opening 40 defined by the forming of the aperture 15 at the planar outer surface 14 in order to provide a fluid-tight seal between the fluid manifolds 8 and the outside environment external to the header 3. The plug 12 includes an insertion portion 18 with a profile that generally matches the opening 40 created in the planar surface 14, so that the plug 12 can be partially inserted into that opening 40 with minimal clearance between side surfaces of the insertion portion 18 and the opening 40. A peripheral flange portion 17 extends beyond the outer periphery of the insertion portion 18 by an amount sufficient to engage and bear upon the planar surface 14 surrounding the opening 40, thereby limiting the insertion depth of the plug 12. In some especially preferable embodiments, such as the exemplary embodiment of FIG. 4, the height of the insertion portion 18 (and, therefore, the depth of insertion of the plug 12 into the opening 40) is approximately equal to the wall thickness 20 of the arcuate wall sections 9.

A groove 25 can be provided in the face of the peripheral flange portion 17 that is disposed against the planar surface 14, and can be used to accommodate a ring of braze material 16. The plug 12, along with the ring of braze material 16, can be assembled to the extruded section 7 prior to brazing of the heat exchanger 1, so that the plug 12 can be secured into the header 3 during the brazing operation. In some embodiments it may be more preferable to instead use a braze foil, braze paste, or clad braze layer on either the plug 12 or the extruded section 7, in which case the braze ring 16 and the groove 25 may be eliminated.

One or more of the plugs 12 can be provided with an integral mounting pin 19 extending outwardly away from the header in a direction perpendicular to the planar outer surface 14. The integral mounting pins 19 can be accommodated into corresponding holes of other components to which the heat exchanger 1 is to be assembled in order to, for example, secure the heat exchanger 1 within a cooling module. Annular vibration isolators can be conveniently assembled over the mounting pin 19 and bear against the peripheral flange portion 17 of the plug 12.

At the ends of the header 3, the cylindrical fluid conduits 8 are sealed with either end caps 11 or fluid ports 10. In the exemplary embodiment of FIG. 1, each of the headers 3 is provided with three end caps 11 and one fluid port 10, so that the fluid to be cooled within the heat exchanger 1 can be received into one of the headers 3 (the inlet header) through its fluid port 10 and can be removed from the other one of the headers 3 (the outlet header) through its fluid port 10. Although the fluid is directly received into only one of the cylindrical fluid manifolds 8 of the inlet header 3, the apertures 15 provided in that header 3 allow at least some of the fluid to pass into the adjacent cylindrical fluid manifold 8 so that the flat tubes 5 connected to each of those fluid manifolds 8 are placed hydraulically in parallel with one another. In similar fashion, the fluid received into that one of the cylindrical fluid manifolds 8 of the outlet header 3 can be transferred by way of the apertures 15 into the cylindrical fluid manifold 8 having the outlet port 10.

By placing multiple fluid manifolds 8 in hydraulic parallel, the present invention is able to provide a more robust design for applications wherein the fluid to be cooled is at an elevated pressure. The ability of the fluid manifold to withstand the elevated internal pressures imposed by the fluid is increased by reducing the diameter of each fluid manifold, without sacrificing the total flow area provided by the flat tubes 5. To that end, it should be understood that the number of cylindrical fluid manifolds 8 that may be provided in each of the headers 3 is not limited to two. Additional fluid manifolds 8 can be provided, and can be fluidly connected to adjacent fluid manifolds through additional apertures 15. It should be understood that a multipass heat exchanger can also be provided by placing apertures 15 between some, but not all, of the adjacent fluid manifolds 8.

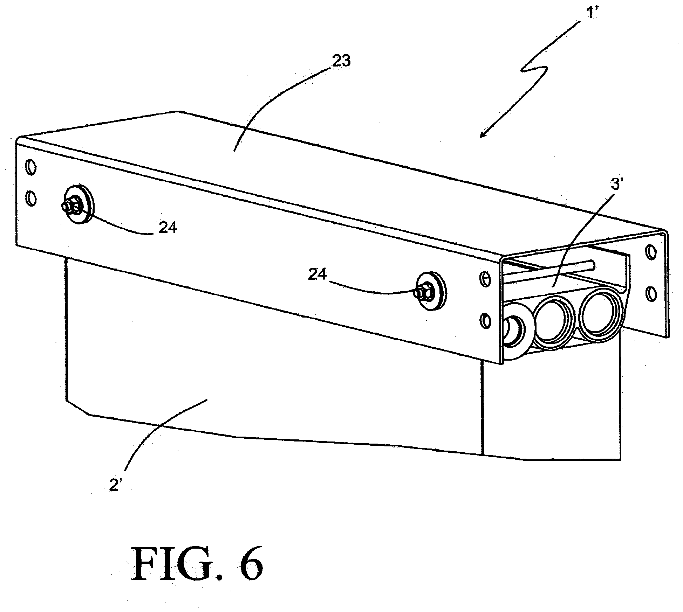

As one non-limiting example of a heat exchanger having more than two cylindrical fluid manifolds within the headers, a portion of a heat exchanger 1' is depicted in FIGs. 6-7. The heat exchanger 1' includes a heat exchange core 2' that is substantially similar to the heat exchange core 2 depicted in FIG. 2, except that three rows of flat tubes 5 are provided in each layer of tubes. Similarly, a header 3' provided at either end of the core 2' (only a single header is shown) includes an extruded section 7' that includes three cylindrical fluid manifolds 8 arranged side-by-side to receive the ends of the tubes 5 in similar fashion as was described previously with reference to the embodiment of FIG. 1.

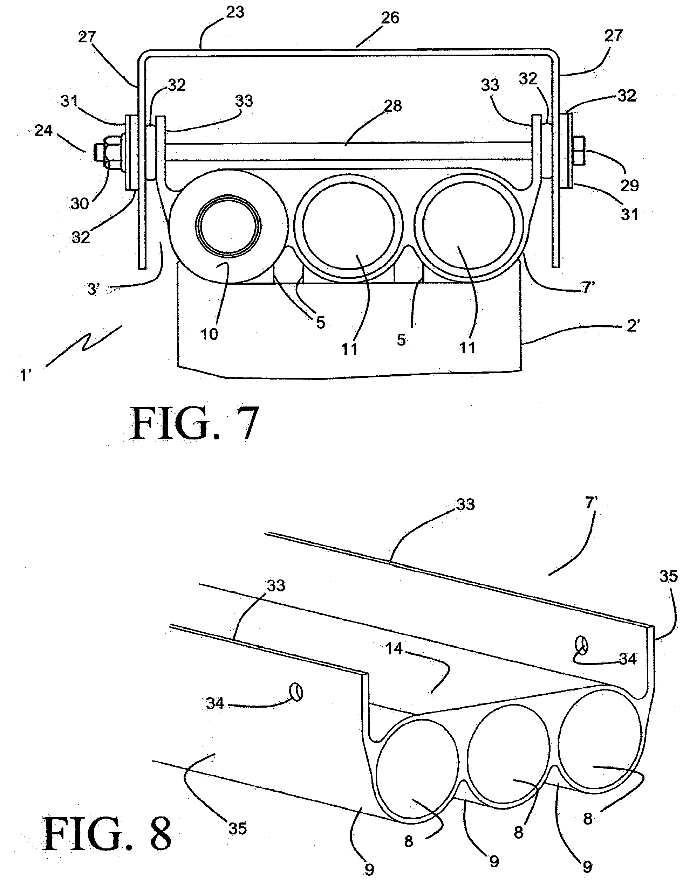

The extruded section 7', shown in greater detail in FIG. 8, is similar to the previously described extruded section 7 in that it includes an arcuate wall section 9 over a majority of the circular periphery of each manifold 8, with the arcuate wall sections 9 having a generally constant wall thickness. The ends of the tubes 5 are received into the fluid manifold through slots provided in those arcuate wall sections 9. A planar outer surface 14 is again provided on the opposing (i.e. the non-core-facing) side of the header 3'.

The extruded header section 7' can optionally be provided with mounting flanges 33, as shown in FIGs. 6-8. The mounting flanges 33 extend in a direction that is perpendicular to the planar surface 14 and is directed away from the heat exchange core 2, thereby defining a pair of mounting planes 35 (i.e. a first mounting plane 35 and a second mounting plane 35) for the heat exchanger 1' which are likewise arranged perpendicular to the planar surface 14. In some preferred embodiments the cylindrical fluid manifolds 8 provided by the header 3' are all located entirely between the pair of mounting planes 35. While the mounting flanges 33 are depicted as extending from the arcuate wall sections 9, it should be understood that they can alternatively or in addition extend from the planar surface 14.

The mounting flanges 33 can be used to structurally mount the heat exchanger 1' into a cooling module or other assembly, as shown in FIGs. 6-7. A U-channel 23 that forms part of the cooling module or other assembly includes parallel, spaced-apart legs 27 joined by a connecting section 26, with the space between the legs 27 sized to be sufficiently large to allow for the header 3' to be received there between. Connection assemblies 24 structurally connect the header 3' to the U-channel 23, and include compressible rubber isolators 32 that are inserted into holes placed within the U-channel 23 so that a portion of each isolator 32 is arranged inside of the U-channel 23 and another portion of the isolator 32 is arranged outside of the U-channel 23. The isolators 32 are provided in pairs at locations that align with corresponding mounting holes 34 provided in the flanges 33, so that a bolt 28 or other similar fastener can be inserted through the paired isolators 32 and the corresponding mounting holes 34 in the flanges 33. Washers 31 are provided between a head 29 of the bolt 28 and one of the paired isolators and between a nut 30 that is threaded onto the end of the bolt 28 and the other one of the paired isolators. Each of the connection assemblies thus includes a bolt 28, nut 30, pair of washers 31, and pair of isolators 32. By tightening the nuts 30 of the connection assemblies 24, the heat exchanger 1' can be secured to the U-channel 23. It should be understood that the connection assemblies 24 can be used either as an alternative to, or in addition to, the mounting pins 19 that were previously described.

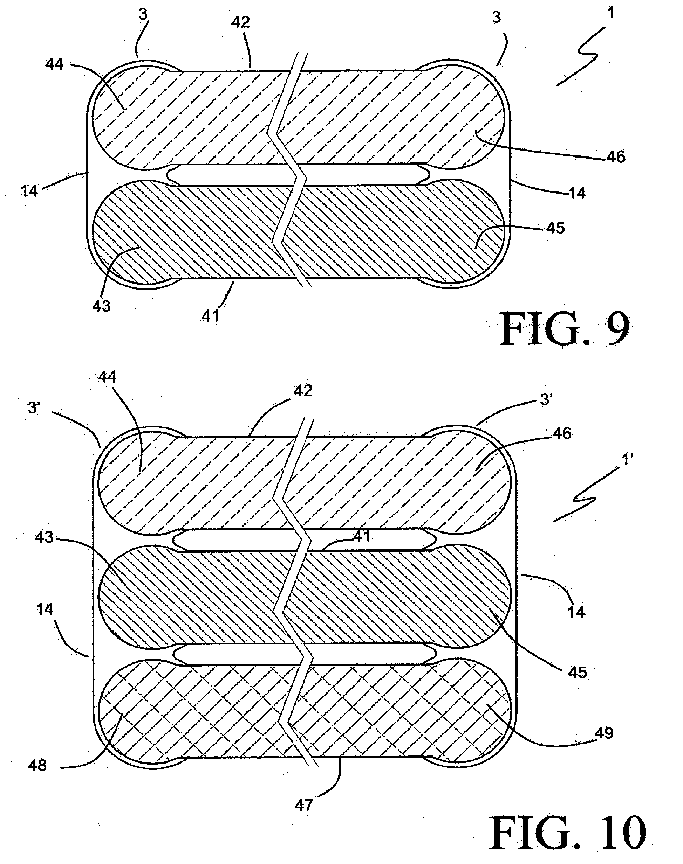

In some embodiments, such as the ones shown in FIGs. 9-12, it may be desirable to incorporate fluid circuits for multiple fluids to be cooled within a single heat exchanger 1, 1'. In such an embodiment, a first series 41 of the flat tubes 5 is used to convey a first one of the fluids to be cooled, while a second series 42 of the flat tubes 5 is used to convey a second one of the fluids to be cooled. As shown in FIG. 9, each of the headers 3 arranged at opposing ends of the heat exchanger 1 again includes a pair of cylindrical fluid manifolds 8. However, the fluid manifolds 8 within a header 3 can be hydraulically isolated from one another, thereby providing a fluid manifold for the first fluid in each header 3 (the manifolds 43, 45) and additionally a fluid manifold for the second fluid in each header 3 (the manifolds 44, 46).

The number of separate fluid flow circuits provided in a given heat exchanger is not limited. Additional rows of tubes can be added, such as by using the previously described headers 3' having three cylindrical fluid manifolds 8 to provide a three-fluid heat exchanger 1', as shown in FIG. 10. Such a heat exchanger includes a third series 47 of the flat tubes 5, which extends between additional fluid manifolds 48, 49 provided within the headers 3'. Incorporating multiple heat exchange functions within a single heat exchanger in this fashion can provide advantages by reducing the space requirements, simplifying system integration and assembly, and reducing overall cost, among others. It should be understood that the invention is not limited to the number of fluids and/or series of tubes shown, and that the number can be further increased in a similar manner to that shown.

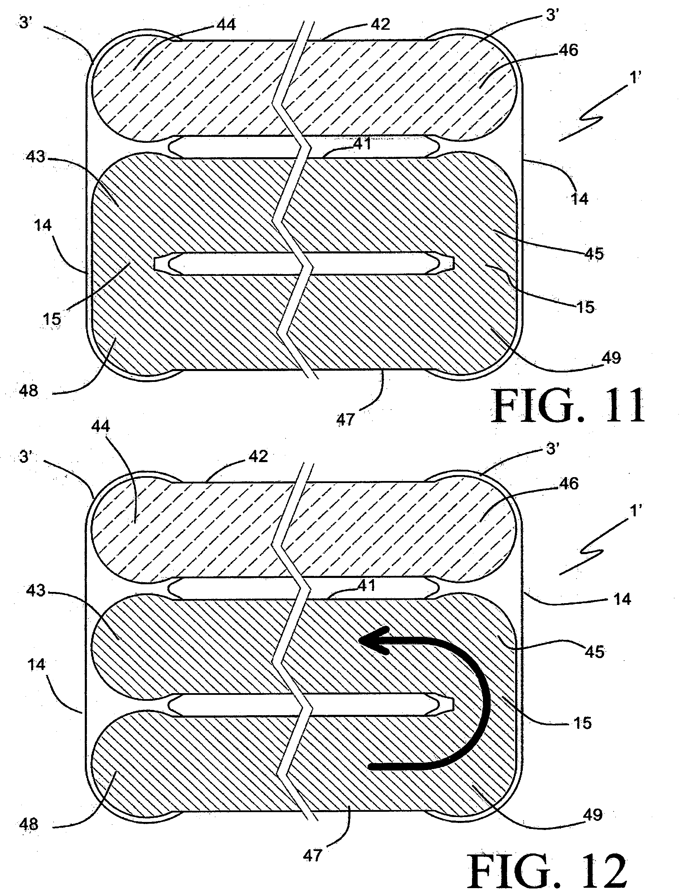

As shown in FIGs. 11 and 12, the number of tube rows or series can also be increased without increasing the number of discrete fluids being cooled within the heat exchanger. In the embodiment of FIG. 11, the additional series 47 is used to provide additional flat tubes 8 for conveying the first fluid through the heat exchanger. The previously described apertures 15 are provided between the cylindrical manifolds 43, 48 in one of the headers 3' and between the cylindrical manifolds 45, 49 in the other header 3' in order to place the series 41 of flat tubes 5 fluidly in parallel with the series 47 of flat tubes 5. Such an arrangement can be especially desirable when the flow area required for the first fluid is substantially greater than the flow area required for the second fluid.

As shown in FIG. 12, in some cases it may be more desirable to provide the apertures 15 in only one of the headers 3, thereby placing the series 41 of flat tubes 5 fluidly in series with the series 47 of flat tubes 5. As indicated by the arrow in FIG. 12, the first fluid is first received into the cylindrical fluid manifold 48, passes through the series 47 of tubes to the cylindrical fluid manifold 49, transfers by way of one or more apertures 15 to the cylindrical fluid manifold 45, and passes through the series 41 of tubes to the cylindrical fluid manifold 43. More effective heat transfer between the air passing through the heat exchanger and the first fluid can be achieved with such an arrangement.

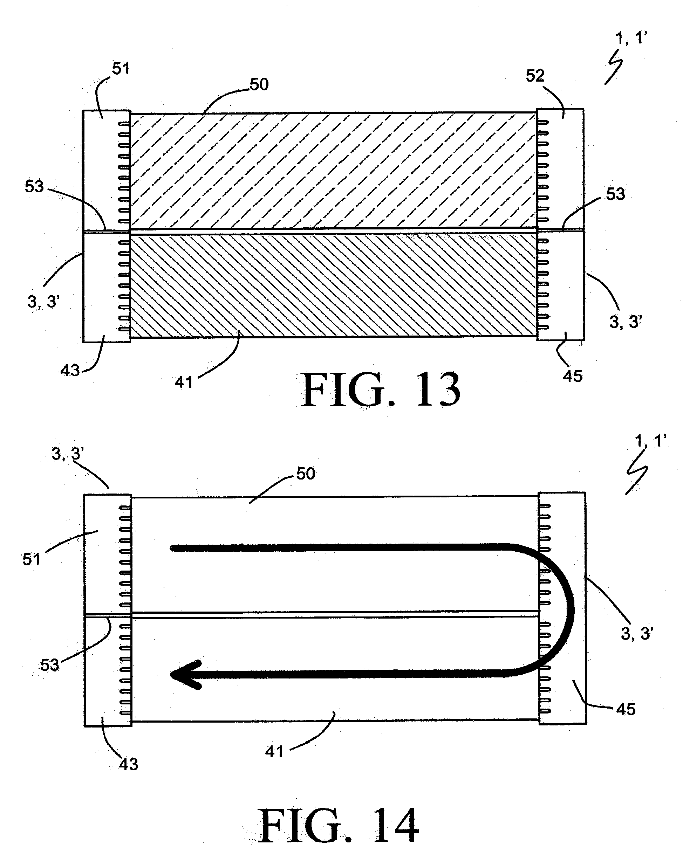

Additional flow circuiting options can also be achieved through the use of baffles 53 inserted into one or both headers 3, 3', as shown in FIGs. 13 and 14. Such a fluid baffle 53 can serve to separate a single cylindrical fluid manifold 8 into two separate fluid manifolds (e.g. 43 and 51, 45 and 52), as depicted. A series 41 of flat tubes 5 and a series 50 of flat tubes 5 are thereby arranged within the same row of tubes of the heat exchanger. Such an arrangement can provide yet another alternative method by which multiple fluids can be accommodated within a single heat exchanger in an optimized fashion when the flow area requirements for each of the fluids is vastly different. Specifically, the location of the baffles 53 along the length of the headers 3, 3' can be selected so that the total number of tubes 5 within the row is appropriately divided between the series 41 and the series 50. Additionally, one or more additional rows of flat tubes can be provided for one or more additional fluids, as was described with reference to FIGs. 9 and 10.

In addition, the flow circuiting of FIG. 9, FIG. 11, and FIG. 13 can be combined within a single heat exchanger 1 to provide even greater flexibility. By way of example, such a heat exchanger can have two or more sets of tubes such as the sets 41 and 42, arranged in rows with tube ends of each set extending through an arcuate wall of a header 3 arranged at each end of the heat exchanger to communicate with cylindrical fluid manifolds 8. A third set of tubes can be arranged in a common row with one of the first two sets of tubes, such as is shown in FIG. 13 for the sets 50 and 41. Baffles 53 are placed in the headers to separate the cylindrical chambers corresponding to those two sets of tubes, in order to provide hydraulic isolation between them. The manifolds for one of those sets of tubes (e.g. the manifolds 51, 52 for the set 50) can be fluidly coupled to the cylindrical manifolds for an adjacent row of tubes by apertures 15, so that the same fluid flows in parallel through two different sets of tubes, with one the sets of tubes being arranged in a common row as another set of tubes for another fluid. In this manner, one of the fluids can be transported through the heat exchanger by all of the flat tubes 5 of one of the sets of tubes, and by some, but not all, of the flat tubes 5 of another one of the sets of tubes. Such an arrangement can be especially desirable when the number of tubes necessary (for example, due to heat transfer considerations or pressure drop considerations or both) for one of the fluids is substantially greater than the number of tubes necessary for another one of the fluids.

It should be understood that the various embodiments depicted in FIGs. 9-14 are depicted in simplified form, and that structural details of the heat exchangers that have been excluded from those figures may still be present. Particularly, it should be understood that any or all of the previously described features, including the plugs 12, mounting pins 19, and mounting flanges 33, can be included in any of those embodiments.

Various alternatives to the certain features and elements of the present invention are described with reference to specific embodiments of the present invention. With the exception of features, elements, and manners of operation that are mutually exclusive of or are inconsistent with each embodiment described above, it should be noted that the alternative features, elements, and manners of operation described with reference to one particular embodiment are applicable to the other embodiments.

The embodiments described above and illustrated in the figures are presented by way of example only and are not intended as a limitation upon the concepts and principles of the present invention. As such, it will be appreciated by one having ordinary skill in the art that various changes in the elements and their configuration and arrangement are possible without departing from the spirit and scope of the present invention.

## Claims

1. A heat exchanger comprising:
a first plurality of flat tubes to convey a first fluid through the heat exchanger;
a second plurality of flat tubes to convey a second fluid through the heat exchanger;
a first header arranged at an end of the heat exchanger, the first header including a first cylindrical fluid manifold having a plurality of tube slots extending through a first arcuate wall section of the first header, a second cylindrical fluid manifold extending parallel and adjacent to the first cylindrical fluid manifold having a plurality of tube slots extending through a second arcuate wall section of the first header, and a thickened wall section bounded by the first cylindrical fluid manifold, the second cylindrical fluid manifold, and a planar outer surface of the first header, the thickened wall section having a generally triangular cross-section; and
a second header arranged at an opposing end of the heat exchanger, the second header including a third cylindrical fluid manifold having a plurality of tube slots extending through a first arcuate wall section of the second header, a fourth cylindrical fluid manifold extending parallel and adjacent to the third cylindrical fluid manifold having a plurality of tube slots extending through a second arcuate wall section of the second header, and a thickened wall section bounded by the third cylindrical fluid manifold, the fourth cylindrical fluid manifold, and a planar outer surface of the second header, the thickened wall section having a generally triangular cross-section;
wherein tube ends of the first plurality of tubes are received through the tube slots extending through the first arcuate wall sections of both the first and second header, and wherein tube ends of the second plurality of flat tubes are received through the second arcuate wall sections of both the first and second headers.

2. The heat exchanger of claim 1, further comprising a third plurality of flat tubes to convey the first fluid through the heat exchanger, the first header additionally including a fifth cylindrical fluid manifold extending parallel and adjacent to the first cylindrical fluid manifold having a plurality of tube slots extending through a third arcuate wall section of the first header, and the second header additionally including a sixth cylindrical fluid manifold extending parallel and adjacent to the third cylindrical fluid manifold having a plurality of tube slots extending through a third arcuate wall section of the second header, the first header having another thickened wall section with a generally triangular cross-section bounded by the first fluid manifold, the fifth fluid manifold, and the planar outer surface of the first header, and the second header having another thickened wall section with a generally triangular cross-section bounded by the third fluid manifold, the sixth fluid manifold, and the planar outer surface of the second header.

3. The heat exchanger of claim 2, wherein the first and the third pluralities of tubes define two sequentially arranged flow passages through the heat exchanger for the first fluid.

4. The heat exchanger of claim 2, wherein the second header includes an aperture extending through the thickened wall section between the third fluid manifold and the sixth fluid manifold in order to fluidly couple the first and the third pluralities of tubes.

5. The heat exchanger of claim 4, wherein the first header includes an aperture extending through the thickened wall section between the first fluid manifold and the fifth fluid manifold in order to fluidly couple the first and the third pluralities of tubes.

6. The heat exchanger of claim 2, wherein the tubes of the first plurality of tubes are hydraulically in parallel with the tubes of the third plurality of tubes.

7. The heat exchanger of claim 1, further comprising a third plurality of flat tubes to convey a fluid through the heat exchanger, the first header additionally including a fifth cylindrical fluid manifold extending concentrically with the first cylindrical fluid manifold having a plurality of tube slots extending through the first arcuate wall section of the first header, and the second header additionally including a sixth cylindrical fluid manifold extending concentrically with the third cylindrical fluid manifold having a plurality of tube slots extending through the first arcuate wall section of the second header, the first header having another thickened wall section with a generally triangular cross-section bounded by the fifth fluid manifold, the second fluid manifold, and the planar outer surface of the first header, and the second header having another thickened wall section with a generally triangular cross-section bounded by the sixth fluid manifold, the fourth fluid manifold, and the planar outer surface of the second header.

8. The heat exchanger of claim 7, wherein the third fluid manifold and the sixth fluid manifold are in direct fluid communication with one another so that the first fluid flows sequentially through the first and the third pluralities of tubes.

9. The heat exchanger of claim 7, wherein the second header includes an aperture extending through the thickened wall section between the fourth fluid manifold and the sixth fluid manifold in order to fluidly couple the second and the third pluralities of tubes.

10. The heat exchanger of claim 9, further comprising a plug inserted into an opening extending through the planar outer surface to the aperture.

11. The heat exchanger of claim 9, wherein the first header includes an aperture extending through the thickened wall section between the second fluid manifold and the fifth fluid manifold in order to fluidly couple the second and the third pluralities of tubes.

12. The heat exchanger of claim 11, further comprising a first plug inserted into an opening extending through the planar outer surface of the first header to the aperture in the first header, and a second plug inserted into an opening extending through the planar outer surface of the second header to the aperture in the second header.

13. A header for a heat exchanger, comprising:
a plurality of parallel arranged cylindrical fluid manifolds;
a plurality of arcuate wall sections having a constant wall thickness, each of the arcuate wall sections corresponding to one of the plurality of cylindrical fluid manifolds and each having a plurality of tube slots extending through the constant wall thickness to the corresponding fluid manifold; and
one or more thickened wall sections bounded by two adjacent ones of the plurality of cylindrical fluid manifolds and a planar outer surface of the header, the one or more thickened wall sections each having a generally triangular cross-section.

14. The header of claim 13, further comprising one or more apertures extending through the one or more thickened wall sections to provide a fluid communication pathway between those cylindrical fluid manifolds bounding the one or more thickened wall sections.

15. The header of claim 14, further comprising one or more plugs in one-to-one correspondence with the one or more apertures, each plug inserted into an opening extending through the planar outer surface to the corresponding aperture.

16. The header of claim 15, wherein a portion of each of the one or more plugs is brazed to the outer planar surface.

17. The header of claim 15, wherein at least some of said plugs includes a mounting pin integral with the plug and extending outwardly from the header in a direction perpendicular to the planar outer surface.

18. The header of claim 15, wherein an insertion depth of each of the one or more plugs is equal to the constant wall thickness of the arcuate wall sections.

19. The header of claim 13, further comprising:
a first mounting flange extending from the header and defining a first mounting plane;
a first mounting hole extending through the first mounting flange;
a second mounting flange extending from the header and defining a second mounting plane parallel to the first mounting plane; and
a second mounting hole extending through the second mounting flange and aligned with the first mounting hole, wherein the first and second mounting planes are oriented perpendicular to the planar outer surface of the header.

20. The header of claim 19, wherein the plurality of parallel arranged cylindrical fluid manifolds is entirely located between the first and second mounting planes.
